(19) Europäisches Patentamt
European Patent Office
Office européen des brevets

(11) **EP 3 693 278 B1**

(12) **EUROPEAN PATENT SPECIFICATION**

(45) Date of publication and mention
of the grant of the patent:
**05.04.2023 Bulletin 2023/14**

(21) Application number: **19382082.6**

(22) Date of filing: **05.02.2019**

(51) International Patent Classification (IPC):
**B64D 29/06** (2006.01)    **B64D 45/00** (2006.01)

(52) Cooperative Patent Classification (CPC):
**B64D 29/06; B64D 45/0005**

(54) **SYSTEM FOR WARNING AN OPEN STATE OF A TWO-PART FAN COWL**

SYSTEM ZUR WARNUNG EINES OFFENEN ZUSTANDS EINER ZWEITEILIGEN LÜFTERHAUBE

SYSTÈME D'AVERTISSEMENT D'UN ÉTAT D'OUVERTURE D'UN CAPOT DE VENTILATEUR EN
DEUX PARTIES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**12.08.2020 Bulletin 2020/33**

(73) Proprietor: **Airbus Defence and Space, S.A.U.
28906 Getafe - Madrid (ES)**

(72) Inventors:
 • **BENÍTEZ GUERRERO, Francisco José
 E-28906 Getafe - Madrid (ES)**

 • **MARCOS MARTÍN, Yolanda
 E-28906 Getafe - Madrid (ES)**

(74) Representative: **ABG Intellectual Property Law,
S.L.
Avenida de Burgos, 16D
Edificio Euromor
28036 Madrid (ES)**

(56) References cited:
**US-A- 4 399 966      US-A1- 2016 010 502
US-A1- 2017 240 287**

## Description

### TECHNICAL FIELD OF THE INVENTION

The present invention belongs to the field of safety operation in aeronautics, in particular to the field of monitoring the proper and securely locking of a fan cowl. More specifically, the invention is of special application in evidencing and noticing an open or unlocked state of a two-part fan cowl.

### BACKGROUND OF THE INVENTION

Aircrafts should undergo periodic inspections, the so-called aircraft maintenance checks, after certain amount of time or usage, which varies by aircraft type, the cycle count (the sum of a "takeoff" and "landing" are considered as an aircraft cycle), or even the number of hours flown since the last check.

These routine inspections lead to mitigate the failures of any of the aircraft systems during operation, both in-flight and on-ground. Nevertheless, the maintenance operations may require the further verification that the system checked recovers its original state for being operated safely.

One of these systems is the engine -fan- nacelle, which is equipped with a two-part cowl articulated by upper hinge fittings to allow its aperture. In ordinary maintenance operation, the two-part cowl is opened in order to access to the equipment and subsystems installed inside of the fan engine, while the aircraft is on-ground. As it was mentioned, once the maintenance task is done, the two-part cowl is closed, wherein said closure is assured by a set of latching units arranged alongside its bottom end.

The latching units are mechanisms formed by paired members, each member arranged at the bottom end of a different part of the two-part fan cowl. Typically, the latching units may be a hook-keeper unit, a pin-latch unit, a hook-latch unit, or the like.

The pairs of members are latched to each other maintaining the two-part cowl closed during operation of the aircraft. However, if a non-proper closure (the pair of members not totally engaged) happens due to an unintentional or inadvertent mistake from operators; it is likely during the aircraft takeoff or early flight that an accidental aperture of the two-part cowl takes place and, as a consequence, this cowling might be detached because of the aircraft speed. The detached portion of the cowling may afterwards impact on the rear fuselage or horizontal/vertical tail plane ('HTP' or 'VTP') causing damage to other systems.

To prevent that, aircraft models requires a pre-flight "walk around" so that the operators can advert an open state of such two-part cowl, and, if so, they must close it and afterwards go to a corresponding alert signal spot to manually disable it. Since most of the engines are mounted beneath the aircraft wing, the two-part cowl or cowling latching mechanism is located beneath the engine in a position which is very close to the ground, being therefore awkward to access by the maintenance personnel or operators.

Typically, the engine nacelle is formed by such two-part cowl surrounding the fan case, an air inlet at the foremost, thrust reversers surrounding turbine and combustor chambers, and a nozzle at the rear part for channeling exhaust gases.

In the vast majority of engine nacelles, the two-part fan cowl rest onto edges of the air inlet and thrust reversers in closed position. Thus, the set of air inlet and thrust reversers are commonly known in the related art as 'nacelle landing'.

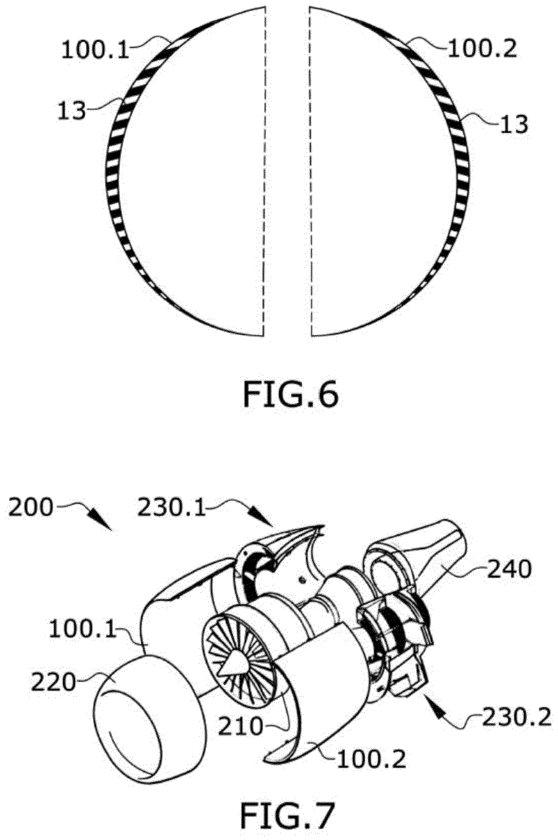

Details of an engine nacelle configuration can be shown in figure 7.

Frequently, an open state of the two-part fan cowl (i.e. a non-latched state of such latching units) leaves each part of the fan cowl hanging from their respective hinged fittings and resting onto the fan engine itself, particularly onto the 'nacelle landing' as mentioned above. Since this 'open' configuration (the two-part fan cowl rests onto the nacelle landing itself) looks like the expected closed configuration, it emphasis the risk of unnoticing such open state by the operator.

Nevertheless, the person skilled in the art will recognize that the act of resting the two-part fan cowl onto the 'nacelle landing' by default depends on the aircraft engine type, being equally valid resting onto the fan case, for instance, for another aircraft engine type. Hereinafter, all these equivalent configurations will be referred to as 'resting onto the fan engine itself'.

Moreover, with the advent of new aircraft models whose fans have larger diameters for improving efficiency thereof, the problem of little ground clearance (which difficult the operator verification task) is also stressed. This drawback is even more common in single-aisle aircrafts, the fans of which tend to be larger and the aircraft wing lower compared with wide-body models.

As a consequence, to solve this problem, a variety of very complex systems have been provided being all summarized in highlighting the non-proper closure of the two-part cowl by an alert signal on-ground as mentioned above. For instance, heavy and complex latching units cooperating with deployable mechanisms are common in the industry. These complex systems also entails the requirement of using expensive materials able to withstand the high fatigue cycles at which the deployable mechanisms are exposed.

Accordingly, there is a need in the related industry for providing a simpler and more economic system able to advert to the operator an open state of the two-part fan cowl.

Document US20170240287A1 discloses an aircraft comprising an engine with a main body and an engine nacelle, the engine main body outputting thrust force, and the engine nacelle surrounding the engine main body. It further comprises an engine pylon that supports the engine main body to an airframe, and axially supports a cowl member to be openable, wherein the cowl member configures the engine nacelle. Also, a locking part is disclosed that locks the cowl member of the engine nacelle in a closed state; and a light emitting sections that are disposed inside the cowl member and show an unlocked state of the cowl member.

Another relevant example of the prior art is provided by US2016010502A1.

## SUMMARY OF THE INVENTION

In a first aspect, the invention provides a two-part fan cowl comprising two parts, and a system for warning an open state of the two-part fan cowl, as fully defined in claim 1.

Broadly, each part of this fan cowl:

at an upper end, it is adapted to be rotatable fixed to at least one hinged fitting, and
at a lower end, it comprises a member of a latching unit, the non-latched or latched states of which define the open or closed state of such two-part fan cowl, respectively;

such that the open state of the two-part fan cowl corresponds to a non-latched state of such at least one latching unit, each part of the fan cowl is left hanged from their respective at least one hinged fitting.

The system, then, comprises: at least one device arranged between these two parts of the fan cowl and adapted to exert force over at least one the parts thereof spacing such at least one of the parts apart from the other, thus leaving a predefined gap between them at their lower ends.

That is, with the open state of the two-part fan cowl (triggered by a non-latched state of such at least one latching unit) each part of such fan cowl is left hanged from their respective hinged fitting(s). According to the prior art, in the absence of a system according to the present invention, each of these parts shall rest onto the nacelle landing itself hindering the operator task of adverting the open/close state as both seems similar.

Nevertheless, the system according to the invention comprises at least one device for exerting force over the parts of such two-part fan cowl spacing them apart from the other, and, consequently, leaving a predefined gap between them at their lower ends and also with the fan engine itself (i.e. with the nacelle landing) which eases the operator task of adverting the open state of the fan cowl. In other words, with the present invention there is, advantageously, an actual change in the physical configuration of the two-part fan cowl when it is either in open or closed state.

Therefore, the present invention provides a lighter, simpler and more economical solution which acts by default spacing apart the respective parts of the fan cowl in case the corresponding latching unit are un-latched. As it is clear, no manual operation by the operator is necessary to provoke such configuration change, being the system always connected and being thus understood as a 'passive' system avoiding the need of deployable mechanisms which entailed expensive materials able to withstand the high fatigue cycles. In addition, the system according to the invention does not need to interact with other mechanisms such as the deployable ones of the prior art.

What is more, due to its simplicity, the present system can be advantageously installed into current two-part fan cowls already in use, being therefore a retrofitable system.

Further, the force to be exerted by the at least one device is defined in terms of at least the following constraints:

- weight of each part of the two-part fan cowl,
- position of their respective centers of mass, and
- distances of such centers of mass to the hinge line(s) of the device(s).

The distribution of mass of each part of the fan cowl when pushed by the at least one device of the system according to the invention leaves a predefined gap (known beforehand) at their lower ends, that predefined gap being appreciable by the operator.

In a preferred embodiment, such predefined gap is 250mm.

A further advantage of the present invention is that, unlike other warning systems known from the prior art, the external surface of the fan cowl is not altered which is desirable in terms of lightning, fire, ventilation and aero-smoothness, for instance.

In a particular embodiment, such at least one device is further configured to be compressed upon bringing together the lower ends of the two parts forming the fan cowl, and is adapted to be kept compressed if the two-part fan cowl is in a closed state, that is, the at least one latching unit is in a latched state.

As it is clear, the two-part fan cowl can be restored to the closed state (e.g. the adequate state in-flight) simply bringing together the two parts of the fan cowl (reducing to zero the gap at their lower end) provided that the latching units are then latched.

Unlike some of the previous systems addressed in the background of the invention which needed a final action by the operator to manually shut-down the alert signal somehow, the system according to the present invention does not need such additional manual operation performed by the operator.

In a preferred embodiment, such at least one device is configured to be compressed upon bringing together the lower ends of the two parts forming the fan cowl by a single operator. In other words, accounting the weight of the parts, a human operator by himself can readily bring together such parts overcoming the force exerted by the at least one device of the system. Due to the inherent mass distribution and configuration of the parts of the fan cowl, the force to be exerted by the single operator is around 20 times less than the one exerted by the device, or in other words, around a 5% of such force.

In this particular case, the at least one device exerts a pressure which is, for example, in the range of 2 to 3 kN.

Advantageously, this embodiment allows saving time in the non-scheduled maintenance tasks from the operators, i.e. those *line maintenance* tasks performed on-ground prior to flight which requires a quick and effective actuation from the operators in order not to delay excessively the takeoff.

In a particular embodiment, the system further comprises a warning indicator arranged on at least one part of the two-part fan cowl which become appreciable in case this at least one part separates from the fan, being such two-part fan cowl in open state.

As it was previously stated, the two-part fan cowl follows the fan case contour and rest on the nacelle landing during its closed state. Therefore, when the latching units are opened, the force exerted by the at least one device of the system (i.e. a push load) separates at least one of such parts from such fan contour, becoming this latter appreciable. Accordingly, any warning indicator arranged between the nacelle landing and the part will become also appreciable.

Advantageously, this embodiments improves the detectability an undesirable open state of the two-part fan cowl by an operator.

Without detriment that other indicator types such as sound may be used, a visual indicator is preferred. For example, a pair proximity sensor-target may be placed on the inside of any part (at least the same where the device(s) is arranged) and the corresponding spot of the fan case or nacelle contour in such a way that a lateral gap triggers a signal either sound or electric to a remote system.

In a particular embodiment, the warning indicator is a colored zone arranged on the internal face of the at least one part and is adapted to become visually appreciable by an operator in case such at least one part separates from the fan.

In a preferred embodiment, such colored zone may be either painted with suitable paint, or a colored film.

An example of a colored film may be a vinyl or the like.

Advantageously, this is a passive, light, simple and economic solution which greatly improves noticing an open state of a two-part fan cowl.

In fact, within this embodiment, a further constraint to define the force to be exerted by the at least one device is added. In a reference system of a transverse section of the two-part fan cowl where the device location defines 0°, and the latching unit location defines 180°, the force to be exerted maintains the part separated by 2 inches (i.e. 51 mm) from the fan contour at both 90° and 270°.

2 inches (51 mm) suffices to the colored zone be visually appreciable by an operator performing conventional maintenance tasks.

The parts forming the two-part fan cowl comprise internal semi-circular transversal frames for stiffening the two-part fan cowl itself. These frames project from the internal face of respective parts.

Accordingly, in a preferred embodiment, the colored zone is arranged on at least one internal frame of the at least one part.

According to the invention, the at least one device is at least one extensible bumper device arranged between the two parts of the fan cowl and adapted to be secured to at least one of the hinged fittings at which force is exerted.

Advantageously, by securing such bumper at both parts of the fan cowl, the needed force to be exerted by the same is therefore less than being only secured to one part.

In addition, the device according of this embodiment is out of the maintenance personnel (i.e. operators) working area and, therefore, it does not disturb other maintenance task, and is less subject to accidental damages.

According to the invention, the at least one extensible bumper device is adapted to be secured at its ends to the pair of hinged fittings of the two-part fan cowl at the upper end.

The extensible bumper device has a dimension by default. Once installed and under the weight of the parts, it shortens (i.e. get compressed) up to maintain spaced apart such parts of the fan cowl so that the predefined gap at their lower ends is left. Finally, upon bringing together these two parts of the fan cowl, the already shortened extensible bumper gets more compressed and is kept with such dimension as long as the two-part fan cowl is in the closed state.

The bumper device shall be extensible because in the 'fully opened state' where maintenance tasks are performed by operator, its length is greatly increased as the parts rotate upwards.

Preferably, the extensible bumper has resilient properties so as to recover its original dimension if uninstalled.

According to the invention, the at least one extensible bumper device further comprises two adaptor fittings, each adaptor fitting adapted to be securely fixed to one hinged fittings to which force is exerted allowing the extensible bumper device to relatively move in case only one or both parts of the two-part fan cowl is separated from the fan.

Advantageously, the use of adaptors improves the capacity of the system to be retrofitable among different fans, each having different upper hinge fittings for articulating the aperture of the parts.

According to the invention, each adaptor comprises:

- a double "U"-shaped plate with at least one attachment means at both ends to be securely fixed to both the hinged fitting and to an extension plate, and
- such extension plate which in turn comprises a rotatable attachment to be joined to the extensible bumper device.

Advantageously, this embodiments attains an easy and quick manner to adapt the present system to particular two-part fan cowl architecture since both parts allows relative displacement therebetween, being then fixed in correct position by the attachment means.

In a particular embodiment, the at least one device is one of the following types:

a coil or helical spring, and/or
a disc-shaped spring such as a Belleville washer or spring, and/or
a gas spring, and/or
a shock-absorbing device made of elastomer, and/or
a wave spring.

Advantageously, all these types of extensible bumper devices can obtain a wide range of loads/forces to be exerted to any (or both) of the parts. In addition, in comparison with prior art solution of latching units cooperating with deployable mechanisms which attained around 2,6Kg weight, the present invention is lighter as only attains 1,8Kg or slightly more depending on the final bumper-type device.

In a preferred embodiment, the at least one device is of the coil or helical spring-type because of the robustness and maturity level of this technology. Also, with this type, degradation is less severe even considering that constant lubrication or any other maintenance tasks are normally avoided, as well as their operation is not affected by temperature conditions as occurs, for example, with pneumatic-type.

For applications of limited space, in a more preferred embodiment, the at least one device is of the pneumatic-type.

It is to be noted that, if a member is installed on one part of the fan cowl, the corresponding paired member shall be installed on the other part so that the latching unit can be easily latched/un-latched by operators. In addition, the expression that the latching unit is configured to be in a latched state and in a non-latched state means that the pair of members are configured to be either engaged or non-engaged depending on the closure or aperture of the two-part cowl, accordingly.

In a particular embodiment, when the two-part fan cowl comprises three pairs of hinged fittings at its upper end, the system in turn comprises a unique extensible bumper device secured to any of such hinged fittings for exerting force.

In a particular embodiment, the at least one latching unit comprises a pair proximity sensor-target configured to match when the latching unit is in the latched state.

Advantageously, this allows a redundant safety system for advert the state of two-part fan cowl. The proximity sensor and target are able to cope with the other, transmitting the signal according to the position of its counterpart.

In a particular embodiment, the proximity sensor is configured to send a signal with the state of the latching unit to a remote system by a connection, preferably an electrical connection

Preferably, the signal is sent to a notice panel in the cockpit of the aircraft to be visible by the pilots. Advantageously, this embodiment allows that the pilot(s) know(s) the entire time the state of the fan cowl. More preferably, the connection may be electrical by a harness, contactless, or the like.

In a second aspect, the invention provides a method of installing the system for warning an open state of the fan cowl nto the two-part fan cowl, as defined in claim 8.

In a particular embodiment, when the system to be installed further comprises a warning indicator (e.g. a colored zone) to be arranged on the at least one part of the two-part fan cowl which become (visually) appreciable in case at least one part separates from the fan, being such two-part fan cowl in open state, the method further comprising the steps of:

- arranging a warning indicator on the at least one part of the two-part fan cowl in a way that it becomes appreciable in case at least one of the parts of the two-part fan cowl separates from the fan.

In a particular embodiment, the warning indicator is a colored zone and the at least one part of the two-part fan cowl comprises at least one internal frame, the method comprising the step of:

- arranging the colored zone on the at least one internal frame of the at least one part in a way that it becomes appreciable in case such at least one part separates from the fan.

In a third aspect, the invention provides an aircraft engine, such as a fan, comprising a two-part fan cowl, and a system for warning an open state of the fan cowl according to any of the embodiments described above.

## DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.

Figure 1.-      This figure shows a perspective view of a two-part fan cowl comprising at least one device according to the invention.

Figure 2.-      This figure shows a front view of a two-part fan cowl comprising at least one device according to the invention.

Figure 3a.-      This figure shows a schematic view of a device arranged between the two parts of the fan cowl.

Figures 3b, 3c.-      These figures show detailed view of embodiments of adaptors interposed between the device and the hinge fitting.

Figures 4a-c.-      This figure shows a two-part fan cowl according to the invention in three different configurations: (a) the closed state, (b) the open state, and (c) the fully opened state where maintenance tasks are performed.

Figures 5a-c.-      This figure shows the movement of a schematic two-part fan cowl upon unlatching the latching unit(s), from being in a closed state (a) towards an open state (c).

Figure 6.-      This figure shows a front view of a two-part fan cowl wherein the warning indicator arranged on the internal frame of the part is visually appreciable according to the invention.

Figure 7.-      This figure shows an exploded schematic aircraft engine, such as a fan, comprising a two-part fan cowl which further comprises at least one device according to the invention.

## DETAILED DESCRIPTION OF THE INVENTION

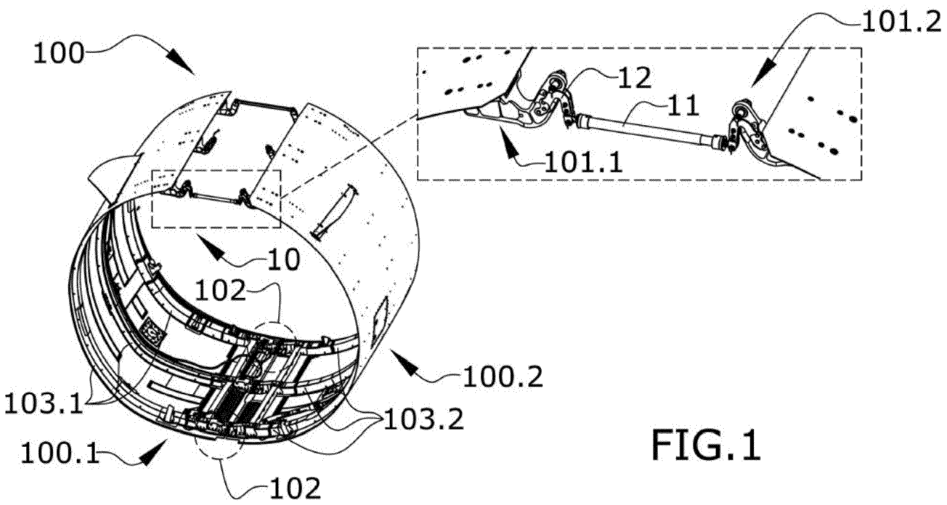

Figure 1 depicts a perspective view of a two-part fan cowl comprising at least one device (11) according to the invention. The two-part fan cowl (100) together with the nose cowl and thrust reverser cowl form the so-called *fan cowling* (not shown in these figures).

The two parts (100.1, 100.2) are articulated by pairs of upper hinge fittings (101) to allow aperture of the fan cowl, while alongside of its bottom end a set of hook-keeper units (102) are spatially arranged to secure and keep both parts (1001.1, 100.2) together. In particular, Fig. 1 shows a close state of these two parts (100.1, 100.2) facing each other and latched by means of their hooks (101.1) or keepers (101.2) which forms part of the hook-keeper units (101).

Without prejudice of the foregoing, a person skilled in the art should recognize that other latching units or mechanisms may be used instead of the hook-keeper units (101) herein exemplified.

Fig. 1 also depicts a system (10) which in turn comprises only one device (11) arranged between the two parts (100.1, 100.2) of the fan cowl exerting force over them. Although such device (11) attempts to space such parts (100.1, 100.2) apart from the other, thus leaving a predefined gap between them at their lower ends, it is not possible because the clamping force of the hook-keeper unit (101) are bigger (remember that Fig. 1 shows the two-part fan cowl in a close state).

In other words, since the lower ends of the parts (100.1, 100.2) are brought together (as the hook-keeper unit(s) are in the latched state), the device(s) (11) of the system (10) are kept compressed.

Also, each part (100.1, 100.2) forming the two-part fan cowl (100) comprise a plurality of internal semi-circular transversal frames (103.1, 1003.2) for stiffening the two-part fan cowl itself. These frames project from the internal face of respective parts (100.1, 100.2) and are configured to abut the nacelle landing of the fan engine when such two-part fan cowl is in the closed state.

For illustrative purposes, the colored zone arranged on the foremost internal frames of the parts is not shown in this figure 1. Nevertheless, a schematic view of such colored zone is represented within figure 6.

It is to be noted that, although there are three hinge fittings (101) in the two-part fan cowl (100), only one device (11) has been installed.

For illustrative purposes, a detailed view of the system (10) is also depicted. It can be seen that the device is an extensible bumper device (11) secured to a pair of hinged fittings (101) of the two parts (100.1, 100.2) of the fan cowl at which force shall be exerted.

More particularly, this extensible bumper device (11) further comprises two adaptors (12) fixedly secured to each hinged fitting (101.1, 101.2). In turn, the extensible bumper device (11) is rotatable fixed to the adaptors (12) for allowing its relative movement in respect of the parts (100.1, 100.2).

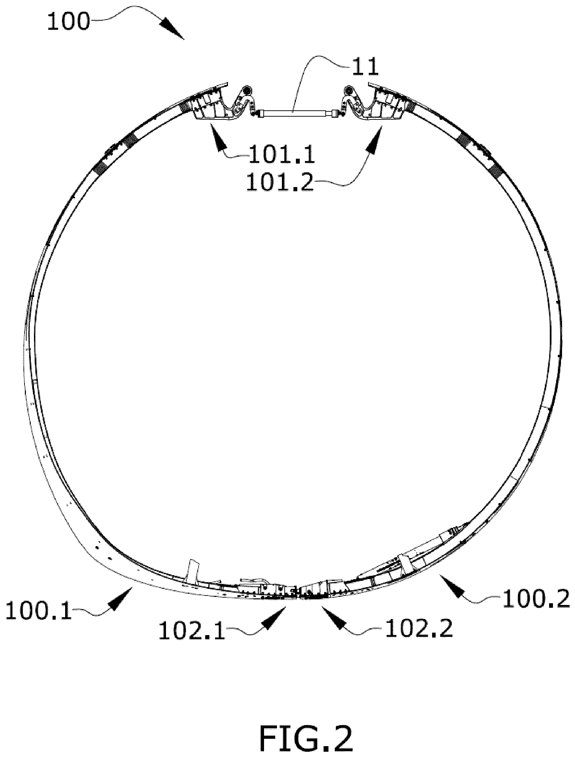

Figure 2 depicts a front view of a two-part fan cowl (100) in an open state (the predefined gap at the lower ends of the parts being around 250mm) comprising one extensible bumper device (11) where the corresponding adaptors (12) are not shown. Therefore, it is clear that bringing the two parts (100.1, 100.2) together will shorten the length of the bumper device (11); while when the two parts (100.1, 100.2) are fully opened for performing maintenance tasks, the bumper device (11) will be stretched. Thus, the extensible bumper device (11) should have resilient properties in order not to collapse under such length changes.

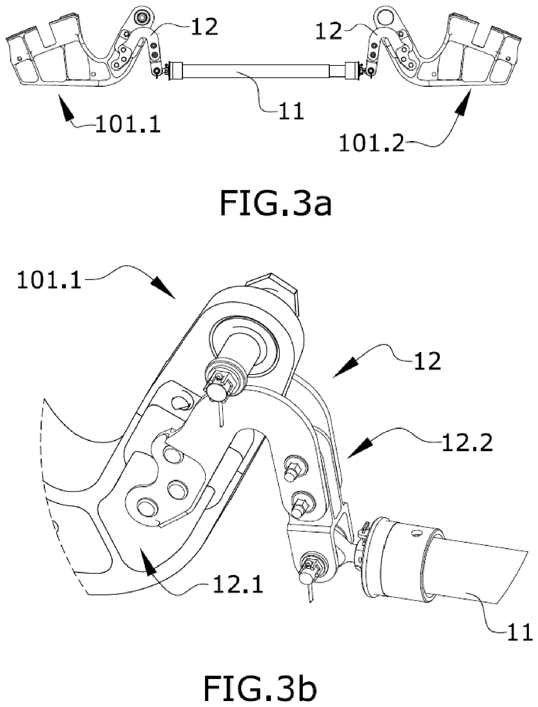

Figures 3a to 3c depict a schematic view of the bumper device (11) arranged between the two parts (100.1, 100.2) of the fan cowl, and a detailed view of the adaptor (12) interposed, respectively.

As it was already mentioned, each adaptor (12) has a first portion (12.1) with a number of attachment means to be securely fixed to a hinged fitting; whilst, at the opposite end, a second portion (12.2) of the adaptor (12) comprises a rotatable attachment to be joined to a suitably end of the extensible bumper device (11) as can be seen in figure 3b.

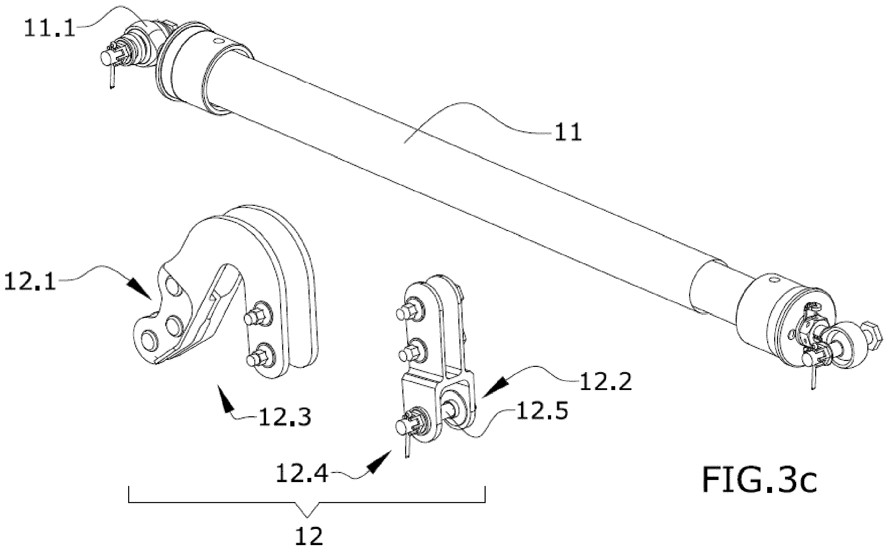

Alternatively, as shown in figure 3c, each adaptor (12) is an installation kit comprising:

- a double "U"-shaped plate (12.3) with several attachments means at both ends to be securely fixed to both the hinged fitting (101) by such first portion (12.1) and to an extension plate (12.4), and
- such extension plate (12.4) which in turn comprises the rotatable attachment (i.e. the second portion, 12.2) to be joined to the extensible bumper device (11). The suitably end of the extensible bumper device (11) is a ring (11.1) adapted to be inserted by a pin or bolt (12.5) of the extension plate (12.4).

The bumper device (11) shown throughout these figures is of the spring-type.

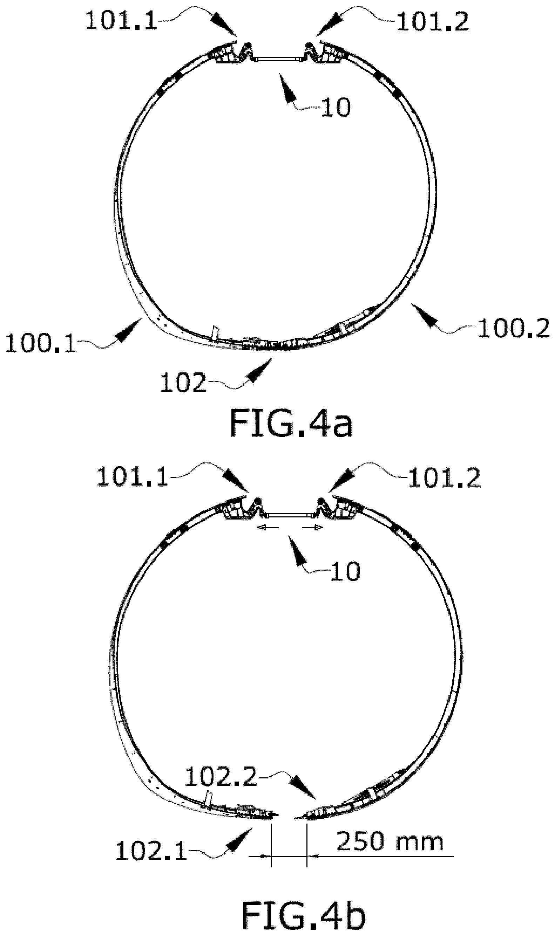

Figures 4a to 4c depict the two-part fan cowl (100) in three different configurations:

- (a) the closed state,
- (b) the open state, and
- (c) the fully opened state where maintenance tasks are performed.

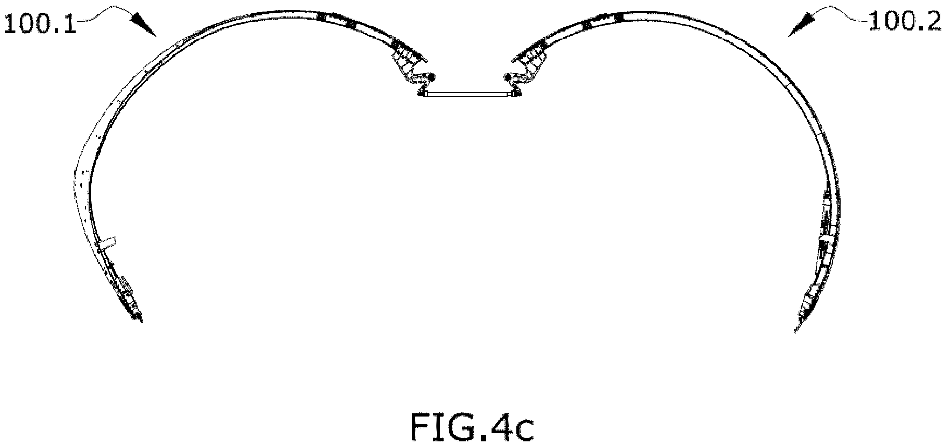

In the open state shown in Fig. 4c, the predefined gap left between the parts (100.1, 100.2) at their lower ends is around 250mm due to the pressure exerted by the extensible bumper device (11).

It is clear from these figures that an actual configuration change takes places between the closed state (Fig. 4a) and the open state (Fig. 4b) unlike the prior art where an open state of the two-part fan cowl (100) (presumably Fig. 4b) indeed leaves each part of the fan cowl resting onto the fan engine itself and no configuration change can be appreciated.

Further, in the state (c), that is, the fully opened state, external equipment such as rigid hoisting bars may be used to keep the parts (100.1, 100.2) in the respective configurations.

In a preferred embodiment, when the gap is greater that the 250mm (for instance, in the fully opened state), the extensible bumper device (11) is configured not to exert any force either positive or negative to the parts (100.1, 100.2).

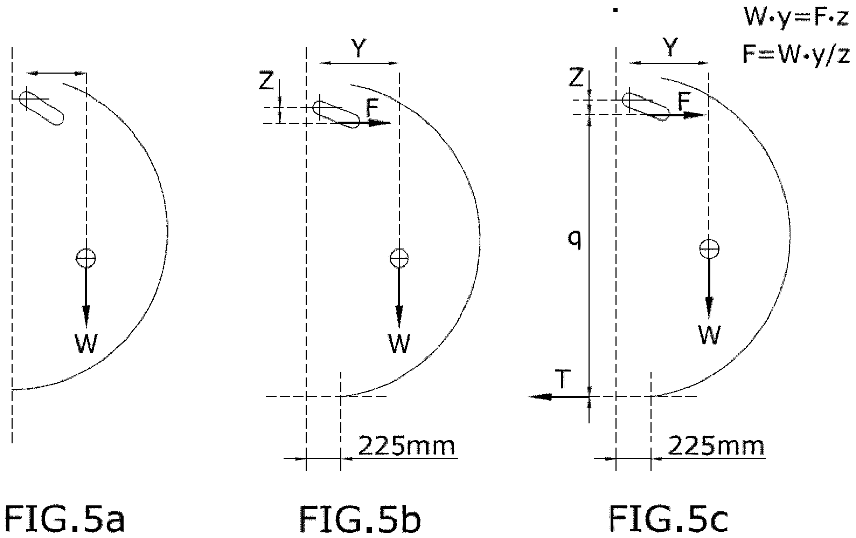

Figures 5a to 5c depicts the movement of a schematic two-part fan cowl (100) upon unlatching the hook-keeper unit(s), from being in a closed state (a) towards an open state (b). It is to be noted that only one half of the two-part fan cowl (100) (this is, one part -100.1, 100.2-) has been represented in respect of a symmetry axis running along hook-keeper unit (102) spot towards the hinge fitting (101) spot.

The transition from figures 5a to 5b is caused mainly by the weight of each part (100.1, 100.2), and the force exerted by the extensible bumper device (11) taking into consideration that the part itself hangs from an articulated upper point corresponding to the hinged fitting (101).

As it was already mentioned, the force to be exerted by the extensible bumper device (11) is defined in terms of at least the following constraints:

- weight of each part (100.1, 100.2) of the two-part fan cowl,
- position of their respective centers of mass, and
- distances of such centers of mass to both the device(s) (11) and the hook-keeper unit(s) (102).

Briefly, the motion from figures 5a to 5b is ruled by the well-known 'force sum law' of mechanics, which is: $W \cdot y = F \cdot z$
wherein 'W' represents the weight of the part, 'y' is the distance in y-axis between the rotation axis of the respective part (100.1, 100.2) and the position of its center of mass, 'F' the force exerted by such device (11), and 'z' the distance between rotation axis of the part (100.1, 100.2) and the extensible bumper device (11) in z-axis.

As mentioned, 'y' and 'z' are as displacements in y-axis and z-axis, respectively, in a orthogonal coordinate system (10) where the x-axis is parallel to the longitudinal axis of the fan engine and z-axis runs along the hook-keeper unit (102) spot towards the hinge fitting (101) spot (similar to the symmetry axis defined previously).

For exemplary purposes, particular values of each of these parameters are:

- 'W' is 50kg. representing the weight of each part,
- 'y' is normally 500mm, and
- 'z' is normally 110mm.

These values leave the force to be exerted by the device ('F') in around 2.226N.

The oblong circle shown in these figures represent the schematic path of the extensible bumper device (11) from the configuration of figure 5a to the one shown in 5b. Once the two-part fan cowl (100) is positioned in the configuration of figure 5b, this is, the gap at their lower ends reaches 250mm, the whole system is therefore in equilibrium of forces. Then, figure 5c schematically exemplifies the beginning of the restoration of the whole system into the closed state.

That is, in order to assure that a single operator can bring together the lower ends of the two parts forming the fan cowl upon compression of such bumper device, the system is also ruled by the equation of mechanics:

$$T \cdot q = F \cdot z$$

wherein 'F' represents, as mentioned, the force exerted by the device (11), 'z' is the distance between rotation axis of the part (100.1, 100.2) and the extensible bumper device (11) in z-axis, 'q' is the vertical distance from such position of the extensible bumper device (11) up to the hook-keeper unit position, and 'T' is the force to be exerted by the single operator in order to bring together such parts.

It shall be understood that, since this is a half representation of the whole system, the force 'T' is for bringing the part (100.1 or 100.2) to the symmetry axis. Also, the sum of 'q' and 'z' is the actual vertical distance between the hinge fitting and the hook-keeper unit.

Since 'q' is in this particular case 2.000mm., the force to be exerted by the single operator is around 127N, that is, around 20 times less than the one exerted by the device (which was 2.226N).

Figure 6 depicts a front view of a two-part fan cowl (100) wherein its parts (100.1, 100.2) have separated from the fan case or nacelle contour, allowing the warning indicator (13) being visually appreciable.

In this particular case, the warning indicator (13) is a colored zone of a film-type -*preferably colored in red and yellow (although not shown in these figures)*-which improves the visually noticing by an operator that one part is indeed separated from the fan (particularly from its nacelle landing) meaning that the two-part fan cowl (100) is in open position.

As it was already mentioned, in aircraft maintenance, a threshold of 2 inches establishes that it shall become visually appreciable by an operator or maintenance personnel.

Therefore, the former formula for selecting the force to be exerted by the extensible bumper device (11) is enlarged with a further variable. In particular, the parts (100.1, 100.2) shown in Fig. 6 separates 2 inches from the fan contour at 90° and 270° allowing the colored lined zone (13) to become visible.

Figure 7 depicts a schematic aircraft engine (200), such as a fan engine, comprising a two-part fan cowl (100.1, 100.2) which further comprises a system (10) according to any of the figures 1 to 6 (although not shown in this figure for illustrative purposes). Also for illustrative purposes, the two-part fan cowl (100) is not represented with the internal semi-circular transversal frames (103) or any other equipment.

This aircraft engine (200) comprises an engine nacelle formed by such two-part cowl (100.1, 100.2) surrounding the fan case (210), an air inlet (220) at the foremost, thrust reversers (230.1, 230.2) surrounding turbine and combustor chambers, and a nozzle (240) at the rear part for channeling exhaust gases.

As it was mentioned, the two-part fan cowl (100) rest onto the closest edges of the air inlet (220) and thrust reversers (230.1, 230.2) in closed position, which jointly form the 'nacelle landing' of the two-part fan cowl (100).

## Claims

**1.** A two-part fan cowl (100) comprising two parts (100.1, 100.2), and a system (10) for warning an open state of the fan cowl (100), wherein each of said parts (100.1, 100.2):

at an upper end thereof, is fixed to at least one hinged fitting (101.1, 101.2), and
at a lower end thereof, comprises a member (102.1, 102.2) of a latching unit (102), the non-latched or latched states of which define the open or closed state of such two-part fan cowl (100), respectively;
such that the open state of the two-part fan cowl (100) corresponds to a non-latched state of said latching unit (102), each part of the fan cowl is left hanged through the respective at least one hinged fitting (101.1, 101.2); wherein:

the system (10) comprises at least one device (11) arranged between said parts (100.1, 100.2) of the fan cowl and adapted to exert a force over at least one of the parts thereof spacing such at least one of the parts (100.1, 100.2) apart from the other, thus leaving a predefined gap between them at their lower ends;
the at least one device is at least one extensible bumper device (11) secured at its ends to the pair of hinged fittings (101.1, 101.2) of the two-part fan cowl (100) at the upper end;
the at least one extensible bumper device (11) further comprises two adaptor fittings (12), each adaptor fitting (12) securely fixed to one hinged fitting (101.1, 101.2) to which force is exerted allowing the extensible bumper device (11) to relatively move in case only one or both parts (100.1, 100.2) of the two-part fan cowl (100) is separated from the fan; and
each adaptor fitting (12) comprises:

- a double "U"-shaped plate (12.3) with several attachments means at both ends securely fixed to both one of the hinged fittings (101.1, 101.2) and to an extension plate (12.4), and
- such extension plate (12.4) which in turn comprises a rotatable attachment joined to the extensible bumper device (11)

**2.** The two-part fan cowl (100), and system for warning an open state of the fan cowl, according to claim 1, wherein such at least one device (11) is further configured to be compressed upon bringing together the lower ends of the two parts (100.1, 100.2) forming the fan cowl, and is adapted to be kept compressed if the two-part fan cowl (100) is in a closed state, that is, the at least one latching unit (102) is in a latched state.

**3.** The two-part fan cowl (100), and system for warning an open state of the fan cowl, according to any of claims 1 or 2, wherein the system (10) further comprises a warning indicator (13) arranged on at least one part of the two-part fan cowl (100) which becomes appreciable in case this at least one part (100.1, 100.2) separates from the fan, being such two-part fan cowl (100) in open state.

**4.** The two-part fan cowl (100), and system for warning an open state of the fan cowl, according to claim 3, wherein the warning indicator (13) is a colored zone arranged on the internal face of the at least one part and is adapted to become visually appreciable by an operator in case such at least one part separates from the fan.

**5.** The two-part fan cowl (100), and system for warning an open state of the fan cowl, according to claim 4, wherein the colored zone is adapted to be arranged on at least one internal frame of the at least one part (100.1, 100.2).

**6.** The two-part fan cowl (100), and system for warning an open state of the fan cowl, according to any of claims 1 to 5, wherein
the at least one extensible bumper device (11) is one of the following types:

    a coil or helical spring, and/or
    a disc-shaped spring such as a Belleville washer or spring, and/or
    a gas spring, and/or
    a shock-absorbing device made of elastomer, and/or
    a wave spring.

**7.** The two-part fan cowl (100), and system for warning an open state of the fan cowl, according to any of previous claims comprising three pairs of hinged fittings (101) at its upper end, and the system (10) comprises a unique extensible bumper device (11) secured to any of such hinged fittings for exerting force.

**8.** A method of installing the system (10) for warning an open state of the fan cowl into the two-part fan cowl (100) , the system and the fan cowl according to any of claims 1 to 7, wherein the method comprises the steps of:

    - providing the two-part fan cowl (100);
    - providing the system (10) at least comprising the at least one device (11);
    - arranging the at least one device (11) of the system (10) between the parts (100.1, 100.2) of the two-part fan cowl (100) in a manner that the at least one device (11) exerts force over at least one of these parts (100.1, 100.2) causing it spacing apart from the other, and leaving a predefined gap between them at their lower ends; and
- securing the at least one device (11) to the hinged fittings (101.1, 101.2).

**9.** The method according to claim 8, the method further comprising the step of:
- arranging the warning indicator (13) defined in claim 3 on at least one part of the two-part fan cowl (100) in a way that it becomes appreciable in case this at least one of the parts (100.1, 100.2) of the two-part fan cowl (100) separates from the fan.

**10.** An aircraft engine, such as a fan, comprising a two-part fan cowl (100) and a system (10) for warning an open state of the fan cowl, the fan cowl and the system according to any of claims 1 to 7.

### Patentansprüche

**1.** Zweiteilige Flügelrad-Verkleidung (100) mit zwei Teilen (100.1, 100.2) und einem System (10) zum Warnen vor einem offenen Zustand der Flügelrad-Verkleidung (100), wobei jedes der Teile (100.1, 100.2):

    an einem oberen Ende davon an mindestens einer Gelenkhalterung (101.1, 101.2) befestigt ist und an einem unteren Ende davon ein Element (102.1, 102.2) einer Verriegelungseinheit (102) aufweist, deren nicht verriegelter oder verriegelter Zustand den offenen bzw. geschlossenen Zustand einer derartigen zweiteiligen Flügelrad-Verkleidung (100) definieren,
so dass der offene Zustand der zweiteiligen Flügelrad-Verkleidung (100) einem nicht verriegelten Zustand der Verriegelungseinheit (102) entspricht, wobei jedes Teil der Flügelrad-Verkleidung an der jeweiligen mindestens einen Gelenkhalterung (101.1, 101.2) aufgehängt bleibt, wobei:

    das System (10) mindestens eine Vorrichtung (11) aufweist, die zwischen den Teilen (100.1, 100.2) der Flügelrad-Verkleidung angeordnet und dazu eingerichtet ist, eine Kraft über mindestens eines der Teile auszuüben, um dieses mindestens eine der Teile (100.1, 100.2) von dem anderen zu beabstanden, so dass dabei zwischen ihren unteren Enden ein vordefinierter Zwischenraum verbleibt,
die mindestens eine Vorrichtung mindestens ein ausziehbares Dämpferelement (11) ist, das an seinen Enden an dem Paar von Gelenkhalterungen (101.1, 101.2) der zweiteiligen Flügelrad-Verkleidung (100) am oberen Ende befestigt ist, das mindestens eine ausziehbare Dämpferelement (11) ferner zwei Adapterhalterungen (12) aufweist, wobei jede Adapterhalterung (12) fest an einer Gelenkhalterung (101.1, 101.2) befestigt ist, auf das eine Kraft ausgeübt wird, wodurch es dem ausziehbaren Dämpferelement (11) ermöglicht wird, sich relativ zu bewegen, wenn nur eines oder beide der Teile (100.1, 100.2) der zweiteiligen Flügelrad-Verkleidung (100) vom Flügelrad getrennt wird/werden, und jede Adapterhalterung (12) aufweist:

- eine doppel-"U"-förmige Platte (12.3) mit mehreren Befestigungseinrichtungen an beiden Enden, die sowohl an einer der Gelenkhalterungen (101.1, 101.2) als auch an einer Verlängerungsplatte (12.4) sicher befestigt sind; und
- die Verlängerungsplatte (12.4), die ihrerseits ein Drehbefestigungselement aufweist, das mit dem ausziehbaren Dämpferelement (11) verbunden ist.

2. Zweiteilige Flügelrad-Verkleidung (100) und System zum Warnen vor einem offenen Zustand der Flügelrad-Verkleidung nach Anspruch 1, wobei das mindestens eine Element (11) ferner dafür konfiguriert ist, beim Zusammenbringen der unteren Enden der beiden Teile (100.1, 100.2), die die Flügelrad-Verkleidung bilden, zusammengedrückt zu werden, und dazu eingerichtet ist, zusammengedrückt zu bleiben, wenn sich die zweiteilige Flügelrad-Verkleidung (100) in einem geschlossenen Zustand befindet, d.h. wenn sich die mindestens eine Verriegelungseinheit (102) in einem verriegelten Zustand befindet.

3. Zweiteilige Flügelrad-Verkleidung (100) und System zum Warnen vor einem offenen Zustand der Flügelrad-Verkleidung nach Anspruch 1 oder 2, wobei das System (10) ferner eine Warnanzeige (13) aufweist, die an mindestens einem Teil der zweiteiligen Flügelrad-Verkleidung (100) angeordnet ist und wahrnehmbar wird, wenn sich dieses mindestens eine Teil (100.1, 100.2) vom Flügelrad löst und sich die zweiteilige Flügelrad-Verkleidung (100) im offenen Zustand befindet.

4. Zweiteilige Flügelrad-Verkleidung (100) und System zum Warnen vor einem offenen Zustand der Flügelrad-Verkleidung nach Anspruch 3, wobei die Warnanzeige (13) ein farbiger Bereich ist, der auf der Innenseite des mindestens einen Teils angeordnet und dazu eingerichtet ist, durch eine Bedienungsperson visuell wahrgenommen zu werden, wenn sich das mindestens eine Teil vom Flügelrad löst.

5. Zweiteilige Flügelrad-Verkleidung (100) und System zum Warnen vor einem offenen Zustand der Flügelrad-Verkleidung nach Anspruch 4, wobei der farbige Bereich dazu eingerichtet ist, an mindestens einem Innenrahmen des mindestens einen Teils (100.1, 100.2) angeordnet zu werden.

6. Zweiteilige Flügelrad-Verkleidung (100) und System zum Warnen vor einem offenen Zustand der Flügelrad-Verkleidung nach einem der Ansprüche 1 bis 5, wobei das mindestens eine ausziehbare Dämpferelement (11) von einem der folgenden Typen ist:

eine Spule oder Spiralfeder; und/oder eine scheibenförmige Feder, wie eine Tellerfeder; und/oder eine Gasfeder; und/oder eine stoßdämpfende Einrichtung aus einem Elastomer; und/oder eine Wellenfeder.

7. Zweiteilige Flügelrad-Verkleidung (100) und System zum Warnen vor einem offenen Zustand der Flügelrad-Verkleidung nach einem der vorangehenden Ansprüche, mit drei Paaren von Gelenkhalterungen (101) an ihrem oberen Ende, wobei das System (10) ein spezifisches ausziehbares Dämpferelement (11) aufweist, das an einer der Gelenkhalterungen zum Ausüben einer Kraft befestigt ist.

8. Verfahren zum Installieren des Systems (10) zum Warnen vor einem offenen Zustand der Flügelrad-Verkleidung in der zweiteiligen Flügelrad-Verkleidung (100), des Systems und der Flügelrad-Verkleidung nach einem der Ansprüche 1 bis 7, wobei das Verfahren die Schritte aufweist:

- Bereitstellen der zweiteiligen Flügelrad-Verkleidung (100);
- Bereitstellen des Systems (10), das mindestens das mindestens eine Dämpferelement (11) aufweist,
- Anordnen des mindestens einen Elements (11) des Systems (10) zwischen den Teilen (100.1, 100.2) der zweiteiligen Flügelrad-Verkleidung (100) auf eine derartige Weise, dass das mindestens eine Dämpferelement (11) eine Kraft auf mindestens eines dieser Teile (100.1, 100.2) ausübt, die bewirkt, dass dieses von dem anderen beabstandet ist, und einen vordefinierten Zwischenraum dazwischen an ihren unteren Enden belässt; und
- Befestigen des mindestens einen Dämpferelements (11) an den Gelenkhalterungen (101.1, 101.2).

**9.** Verfahren nach Anspruch 8, wobei das Verfahren ferner den Schritt aufweist:

- Anordnen der in Anspruch 3 definierten Warnanzeige (13) an mindestens einem Teil der zweiteiligen Flügelrad-Verkleidung (100) derart, dass sie wahrnehmbar ist, wenn sich dieses mindestens eine Teil (100.1, 100.2) der zweiteiligen Flügelrad-Verkleidung (100) vom Flügelrad löst.

**10.** Flugzeugtriebwerk, wie z.B. ein Flügelrad, mit einer zweiteiligen Flügelrad-Verkleidung (100) und einem System (10) zum Warnen vor einem offenen Zustand der Flügelrad-Verkleidung, der Flügelrad-Verkleidung und dem System nach einem der Ansprüche 1 bis 7.

## Revendications

**1.** Un capot de soufflante (100) en deux parties comprenant deux parties (100.1, 100.2), et un système (10) d'avertissement d'un état d'ouverture du capot de soufflante (100), chacune desdites parties (100.1, 100.2) :

à une extrémité supérieure d'elle-même, étant fixée à au moins une fixation articulée (101.1, 101.2), et
à une extrémité inférieure d'elle-même, comprenant un organe (102.1, 102.2) d'une unité de verrouillage (102), dont les états non verrouillé ou verrouillé définissent respectivement l'état d'ouverture ou de fermeture d'un tel capot de soufflante (100) en deux parties ;
de sorte que l'état d'ouverture du capot de soufflante (100) en deux parties correspond à un état non verrouillé de ladite unité de verrouillage (102), chaque partie du capot de soufflante étant laissée suspendue au moyen de ladite au moins une fixation articulée (101.1, 101.2) respective ;
dans lequel :

le système (10) comprend au moins un dispositif (11) agencé entre lesdites parties (100.1, 100.2) du capot de soufflante et apte à exercer un effort sur au moins une des parties de celui-ci de façon à écarter une telle dite au moins une des parties (100.1, 100.2) de l'autre, laissant ainsi un espace prédéfini entre elles à leurs extrémités inférieures ;
ledit au moins un dispositif est au moins un dispositif d'amortissement extensible (11) fixé à ses extrémités à la paire de fixations articulées (101.1, 101.2) du capot de soufflante (100) en deux parties à l'extrémité supérieure ;
ledit au moins un dispositif d'amortissement extensible (11) comprend en outre deux fixations d'adaptation (12), chaque fixation d'adaptation (12) étant solidement fixée à une fixation articulée (101.1, 101.2) sur laquelle une force est exercée permettant au dispositif d'amortissement extensible (11) de se déplacer relativement dans le cas où une seule ou les deux parties (100.1, 100.2) du capot de soufflante (100) en deux parties sont séparées de la soufflante ; et
chaque fixation d'adaptation (12) comprend :

- une double plaque en forme de "U" (12.3) avec plusieurs moyens de fixation aux deux extrémités solidement fixés à la fois à l'une des fixations articulées (101.1, 101.2) et à une plaque d'extension (12.4), et
- une telle plaque d'extension (12.4) qui, en ce qui la concerne, comprend une fixation rotative solidaire du dispositif d'amortissement extensible (11).

**2.** Le capot de soufflante (100) en deux parties, et le système d'avertissement d'un état d'ouverture de la soufflante, selon la revendication 1, dans lequel un tel au moins un dispositif (11) est en outre configuré pour être comprimé lors du rapprochement des extrémités inférieures des deux parties (100.1, 100.2) formant le capot de soufflante, et est adapté pour être maintenu comprimé si le capot de soufflante (100) en deux parties est dans un état de fermeture, c'est-à-dire que ladite au moins une unité de verrouillage (102) est dans un état verrouillé.

**3.** Le capot de soufflante (100) en deux parties, et le système d'avertissement d'un état d'ouverture de la soufflante, selon l'une quelconque des revendications 1 ou 2, dans lequel le système (10) comprend en outre un indicateur d'avertissement (13) agencé sur au moins une partie du capot de soufflante (100) en deux parties qui devient sensible dans le cas où cette au moins une partie (100.1, 100.2) se sépare de la soufflante, ce capot de soufflante (100) en deux parties étant à l'état d'ouverture.

**4.** Le capot de soufflante (100) en deux parties, et le système d'avertissement d'un état d'ouverture de la soufflante, selon la revendication 3, dans lequel l'indicateur d'avertissement (13) est une zone colorée agencée sur la face interne de ladite au moins une partie et qui est adaptée pour devenir visuellement sensible par un opérateur dans le cas où au moins une telle partie se sépare de la soufflante.

**5.** Le capot de soufflante (100) en deux parties, et le système d'avertissement d'un état d'ouverture de la soufflante, selon la revendication 4, dans lequel la zone colorée est adaptée pour être agencée sur au moins un châssis interne de ladite au moins une partie (100.1, 100.2).

**6.** Le capot de soufflante (100) en deux parties, et le système d'avertissement d'un état d'ouverture de la soufflante selon l'une quelconque des revendications 1 à 5, dans lequel ledit au moins un dispositif d'amortissement extensible (11) est selon l'un des types suivants :

> un ressort enroulé ou hélicoïdal, et/ou
> un ressort en forme de disque tel qu'une rondelle Belleville ou un ressort, et/ou
> un ressort à gaz, et/ou
> un dispositif amortisseur en élastomère, et/ou
> un ressort ondulé.

**7.** Le capot de soufflante (100) en deux parties, et le système d'avertissement d'un état d'ouverture du capot de soufflante, selon l'une quelconque des revendications précédentes, comprenant trois paires de fixations articulées (101) à son extrémité supérieure, et le système (10) comprend un dispositif d'amortissement extensible (11) unique fixé à l'une quelconque de ces fixations articulées pour exercer une force.

**8.** Un procédé d'installation du système (10) pour avertir d'un état d'ouverture du capot de soufflante dans le capot de soufflante (100) en deux parties, le système et le capot de soufflante selon l'une quelconque des revendications 1 à 7, dans lequel le procédé comprend les étapes consistant à :

> - prévoir le capot de soufflante (100) en deux parties ;
> - prévoir le système (10) comprenant au moins ledit au moins un dispositif (11) ;
> - agencer ledit au moins un dispositif (11) du système (10) entre les parties (100.1, 100.2) du capot de soufflante (100) en deux parties de manière à ce que ledit au moins un dispositif (11) exerce une force sur au moins une de ces parties (100.1, 100.2) la faisant s'écarter de l'autre, et laissant entre elles un espace prédéfini à leurs extrémités inférieures ; et
> - fixer ledit au moins un dispositif (11) aux fixations articulées (101.1, 101.2)

**9.** Le procédé selon la revendication 8, le procédé comprenant en outre l'étape consistant à :

> - agencer l'indicateur d'avertissement (13) défini dans la revendication 3 sur au moins une partie du capot de soufflante (100) en deux parties de manière à ce qu'il devienne sensible dans le cas où cette au moins une des parties (100.1, 100.2) du capot de soufflante (100) en deux parties se sépare de la soufflante.

**10.** Un moteur d'aéronef, tel qu'une soufflante, comprenant un capot de soufflante (100) en deux parties et un système (10) d'avertissement d'un état d'ouverture du capot de soufflante, le capot de soufflante et le système selon l'une quelconque des revendications 1 à 7.

FIG.1

EP 3 693 278 B1

FIG.2

FIG.3a

FIG.3b

FIG.3c

101.1    101.2

10

100.1    100.2

102

FIG.4a

101.1    101.2

10

102.2

102.1    250 mm

FIG.4b

100.1

100.2

FIG.4c

$W \cdot y = F \cdot z$

$F = W \cdot y / z$

**FIG.5c**

225mm

**FIG.5b**

225mm

**FIG.5a**

FIG.6

FIG.7

**EP 3 693 278 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20170240287 A1
- US 2016010502 A1